# EUROPÄISCHE PATENTSCHRIFT

(11) **EP 0 829 637 B1**
(45) Veröffentlichungstag und Bekanntmachung des Hinweises auf die Patenterteilung: **09.06.1999**
(21) Anmeldenummer: 96114362.5
(22) Anmeldetag: 07.09.1996
(51) Int. Cl.: F02K 9/68

(54) **Triebwerk**
Thruster
Moteur à réaction

(43) Veröffentlichungstag der Anmeldung: 18.03.1998
(73) Patentinhaber: DaimlerChrysler Aerospace AG, 85521 Ottobrunn (DE)
(72) Erfinder: Tiedtke, Peter, 28359 Bremen (DE); Wiener, Josef, 28213 Bremen (DE)
(74) Vertreter: Hansmann, Dierk, Dipl.-Ing.

(56) Entgegenhaltungen:
- WO-A-93/03962
- FR-A- 2 455 184
- FR-A- 2 556 046
- US-A- 2 721 788
- US-A- 4 069 664
- US-A- 4 122 671
- US-A- 4 324 819
- "Monopropellant Hydrazine Propulsion Technology", Nr. 9/88/5000 MBB Zeitschrift ERNO Sept. 1988

## Beschreibung

Die Erfindung betrifft ein Triebwerk auf der Basis der katalytischen und/oder chemischen Zersetzung eines flüssigen Energieträgers, insbesondere Hydrazin, bei dem der Energieträger über wenigstens ein Einspritzrohr in eine mit einem Katalysatorbett gefüllte Zersetzungskammer gefördert wird, wobei die Einspritzrohre in einen zur Zersetzungskammer hin abgedeckten, mit in die Zersetzungskammer führenden Austrittsöffnungen versehenen Ringkanal münden.

Triebwerke, bei denen Hydrazin als flüssiger Energieträger verwendet wird, sind unter anderem aus der DE 42 40 962 bekannt. Sie werden für verschiedene Anwendungsfälle im Bereich der Raumfahrttechnik eingesetzt und, entsprechend den unterschiedlichen Aufgaben, für einen weiten Bereich von Schubklassen hergestellt. Dabei finden sowohl Triebwerke Verwendung, bei denen das Hydrazin nur über eine einzige, zentral im Einspritzkopf angeordnete Einspritzbohrung auf das in der Zersetzungskammer befindliche Katalysatorbett gelangt, als auch Triebwerke, bei denen das Hydrazin über eine Vielzahl von im Einspritzkopf angeordneten Bohrungen in die Zersetzungskammer gesprüht wird. Als Katalysatorbett dient dabei häufig eine aus einzelnen Körnern bestehende Füllung eines katalytisch wirksamen Werkstoffes.

Ein Problem, das bei derartigen Triebwerken, insbesondere bei häufigen Kaltstarts, aber auch im Puls- und Dauerbetrieb auftreten kann, ist ein frühzeitiger Schub- und Leistungsverlust infolge einer Schädigung des Katalysatorbettes. Hervorgerufen werden diese Störungen in der Regel durch eine nicht optimale Verteilung des eingespritzten Hydrazins auf die Katalysatoroberfläche, aus der eine extrem hohe lokale Erosionsbelastung resultiert. Durch diese zu starke lokale Bettbelastung werden die mit Hydrazin beaufschlagten Katalysatorkörner zerstört, und es kommt zu einer Verdichtung der Katalysatorpackung. Die Folge ist ein schneller Anstieg des Druckverlustes im gesamten Katalysatorbett. Dieses wiederum führt zu einem instabilen Brennverhalten des Triebwerkes mit einem hohen Leistungsverlust in allen Betriebsarten. Zur Minderung bzw. Vermeidung dieses Erosionseffektes ist bereits vorgeschlagen worden, das Katalysatorbett durch eine oder mehrere Lagen eines Drahtgewebes gegen eine direkte Beaufschlagung durch den aus den Einspritzrohren austretenden Hydrazinstrahl abzuschirmen.

So ist aus der Firmenschrift der MBB (ERNO vom September 1988 "Monopropellant Hydrazine Propulsion Technology", Nr. 9/88/5000, ein Triebwerk gemäß dem Oberbegriff bekanntgeworden, das die Bezeichnung CHT 350 trägt. Ausgehend von einem derartigen Triebwerk ist es Aufgabe der Erfindung, ein Triebwerk mit einer noch höheren Antriebsleistung bereitzustellen, das dabei zugleich eine hohe Funktionstüchtigkeit und niedrige Fertigungskosten aufweist.

Die Lösung dieser Aufgabe erfolgt durch ein Triebwerk mit den kennzeichnenden Merkmalen des Patentanspruches 1. Vorteilhafte Weiterbildungen des erfindungsgemäßen Triebwerkes sind in den weiteren Ansprüchen angegeben. Dadurch, daß bei dem Triebwerk nach der Erfindung der sich an die Einspritzrohre anschließende Ringkanal von einem als separates Bauteil zu fertigenden, mit einer gewölbten, von Austrittsbohrungen symmetrisch durchsetzten Außenfläche versehenen Ring, einem sogenannten Aspiratorrring, gebildet wird, ist dieses Triebwerk besonders einfach und mit hoher Wiederholgenauigkeit im Hinblick auf seine Leistungscharakteristik zu fertigen. Durch die in den weiteren Ansprüchen angegebene, bevorzugte Art der Anordnung dieser Austrittsbohrungen auf dem Aspiratorring kann überdies die Einspritzcharakteristik so ausgelegt werden, daß es zu einer optimalen Beaufschlagung des Katalysatorbettes durch das Hydrazin kommt und daß unerwünschte Ansammlungen von Hydrazin im Hohlraum zwischen den Einspritzrohren und nachfolgenden Filtersieben vermieden werden. Hierzu trägt auch die aus der gewölbten Form des Aspiratorringes resultierende Gestaltung des Ringkanals bei, die zu einer wesentlichen Strömungsberuhigung des in den Ringkanal eintretenden Hydrazins führt. Eine optimale Verteilung des auf das Katalysatorbett auftreffenden Hydrazins ergibt sich, wenn gemäß der bevorzugten Ausführungsform der Erfindung das den Aspiratorring vom Katalysatorbett separierende Sieb in seiner Formgebung derjenigen des Aspiratorringes angeglichen ist.

Schließlich ist es von besonderem Vorteil, wenn gemäß dem bevorzugten Ausführungsbeispiel des Triebwerkes nach der Erfindung eine modulartige Bauweise gewählt wird, bei der sich das Triebwerk aus zwei unabhängig voneinander zu fertigenden Baugruppen zusammensetzt. Eine dieser beiden Baugruppen besteht aus dem Einspritzbereich sowie einem diesem nachgeschalteten ersten Katalysatorbett, während die zweite Baugruppe von einem zweiten Katalysatorbett und der sich anschließenden Expansionsdüse gebildet wird. Auf diese Weise ergeben sich wesentlich kürzere Fertigungszeiten sowie beträchtliche Einsparungen bei den Fertigungskosten.

Nachfolgend soll das Triebwerk gemäß der Erfindung anhand von in der Zeichnung dargestellten Ausführungsbeispielen näher erläutert werden. Es zeigen:
- Fig. 1: einen Schnitt durch ein erstes Triebwerk,
- Fig. 2: einen Schnitt durch ein zweites Triebwerk,
- Fig. 3: einen Teilbereich der in Fig. 2 dargestellten Anordnung und
- Fig. 4 bis 6: Einzelheiten der in Fig. 3 gezeigten Anordnung.

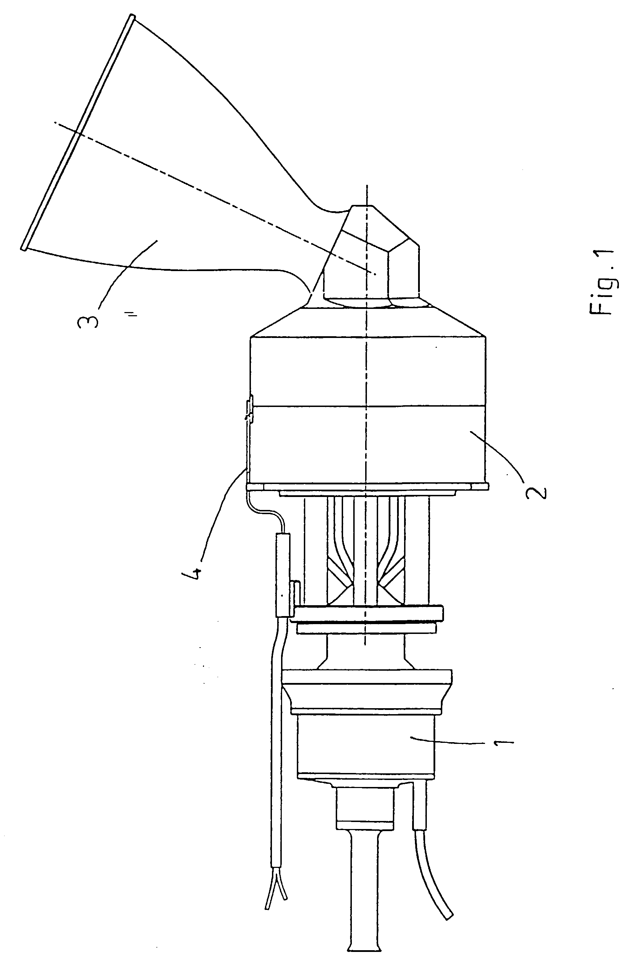

Bei den in den Figuren dargestellten Triebwerken handelt es sich um solche, die auf der Basis der katalytischen und/oder chemischen Zersetzung eines flüssigen Energieträgers, in diesem Fall Hydrazin, betrieben werden und die in der Raumfahrttechnik, beispielsweise zur Lageregelung von Satelliten und Orbitalstationen Verwendung finden. Der prinzipielle Aufbau eines derartigen Triebwerkes ist aus Fig. 1 ersichtlich: Das Triebwerk besteht im wesentlichen aus einem Einspritzteil mit einem Einspritzventil 1 für den flüssigen Energieträger, einer Reaktions- oder Zersetzungskammer 2 sowie einer dieser nachgeschalteten Expansionsdüse 3. Das Triebwerk ist im Fall des hier dargestellten Ausführungsbeispiels in einem Einbaugehäuse 4 untergebracht.

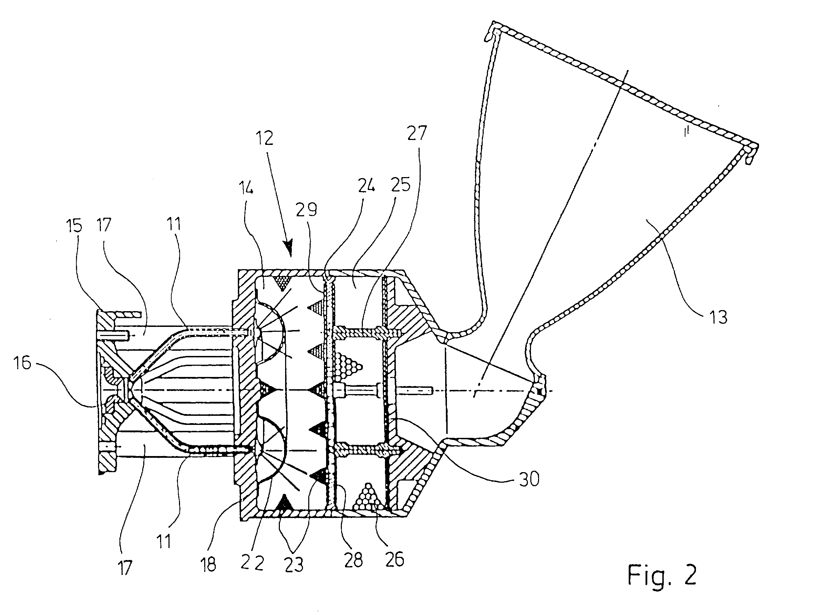

Einen prinzipiell gleichen Aufbau weist das in Fig. 2 dargestellte Triebwerk auf, bei dem der Übersichtlichkeit halber das Einspritzventil nicht mit dargestellt ist und bei dem die Expansionsdüse 13 unter einem Winkel zur Längsachse der zylindrischen Zersetzungskammer 12 angeordnet ist. Das von Steuer- oder Einspritzventil einströmende Hydrazin gelangt über eine Vielzahl von Einspritzrohren 11, im vorliegenden Fall handelt es sich um insgesamt sechs Einspritzrohre 11, in einen ersten Reaktionsraum 14 der zweiteilig aufgebauten Zersetzungskammer 12. Der Flansch 15, der das Einspitzventil haltert und in dem eine Eintrittsblende 16 angeordnet ist, ist durch sechs Distanzstäbe 17, die die Einspritzrohre 11 umgeben bzw. zwischen diesen angeordnet sind, mit einer Kopfplatte 18 der Zersetzungskammer 12 verbunden.

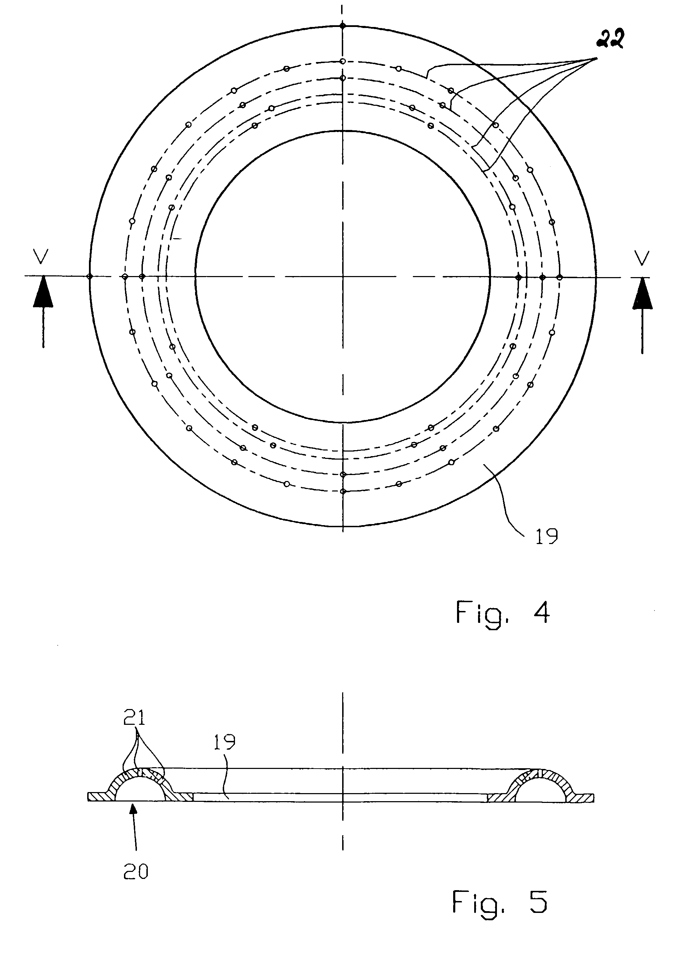

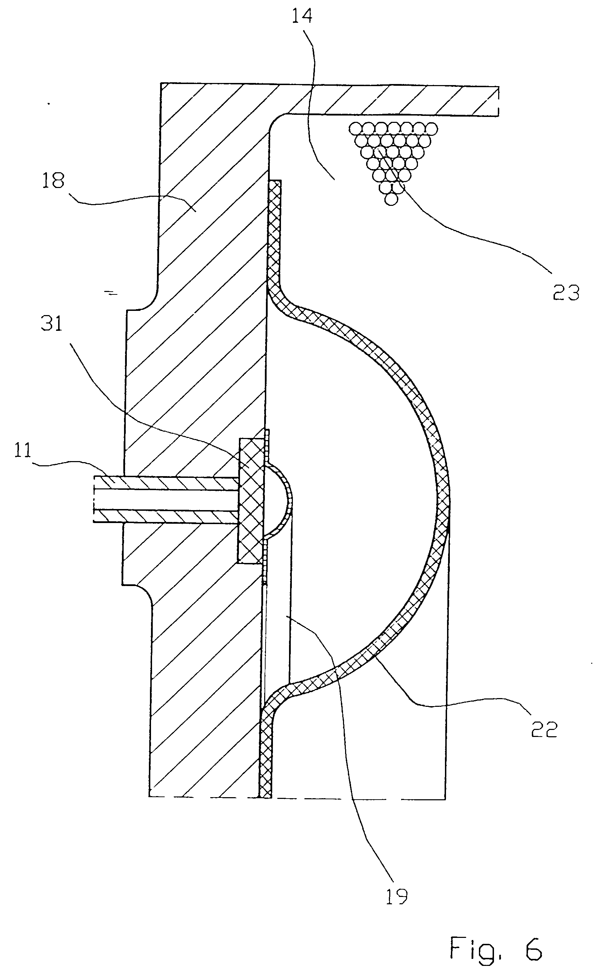

Die Eintrittsöffnungen der Einspritzrohre 11 in dem Reaktionsraum 14 sind durch einen an die Kopfplatte 18 angelöteten Ring, den sogenannten Aspiratorring 19, abgedeckt. Dieser in den Figuren 4 und 5 im Detail gezeigte Aspiratorring 19 weist einen Ringkanal 20 auf, von dem aus äquidistant angeordnete Bohrungen 21 das in den Ringkanal 20 einströmende Hydrazin gleichmäßig und fein verteilt in den Reaktionsraum 14 abgeben. Die Bohrungen 21 sind, wie insbesondere aus Fig. 4 ersichtlich, auf unterschiedlichen, im vorliegenden Fall vier, jedoch mindestens drei, Kreisen 22 angeordnet, wobei die Anzahl der Bohrungen 20 auf den einzelnen Kreisen 21 verschieden groß gewählt ist. Im Fall des hier dargestellten Ausführungsbeispiels beträgt diese Anzahl sechs auf dem innersten Kreis, und acht, zwölf bzw. vierundzwanzig auf den nachfolgenden Kreisen. Auf diese Weise ergibt sich eine strahlenförmige Verteilung des austretenden Hydrazins.

Die Hydrazinstrahlen treffen auf ein ebenfalls ringförmig über dem Aspiratorring 19 angeordnetes Netz 22, das sogenannte Aspiratorsieb. Dieses besteht aus einem feinmaschigen Drahtgewebe und fächert die Hydrazinstrahlen stark auf, bevor sie auf das im ersten Reaktionsraum 14 angeordnete Katalysatorbett auftreffen. Bei diesem ersten Katalysatorbett 23 handelt es sich im Fall des hier beschriebenen Ausführungsbeispiels um kugelförmige Träger aus einer Aluminiumoxidkeramik (Al₂O₃), die mit etwa 33 bis 35 Gewichtsprozent Iridium (Ir) dotiert oder beschichtet sind.

Durch eine gelochte Zwischenplatte 24 getrennt gegenüber diesem ersten Katalysatorbett 23 ist in einem zweiten Reaktionsraum 25 ein weiteres Katalysatorbett 26 angeordnet, dessen Aufbau sich von dem des ersten unterscheidet. Zwar besteht auch dieses zweite Katalysatorbett 26 aus kugelförmigen Trägern aus Aluminiumoxidkeramik (Al₂O₃), jedoch sind diese mit einer Mischung aus je etwa 16 Gewichtsprozent Iridium (Ir) und Ruthenium (Ru) dotiert bzw. beschichtet. Auf diese Weise ergibt sich eine äußerst preisgünstige Katalysatorfüllung, die den gesamten zwischen Distanzstäben 27 im Reaktionsraum 25 verbleibenden Platz einnimmt.

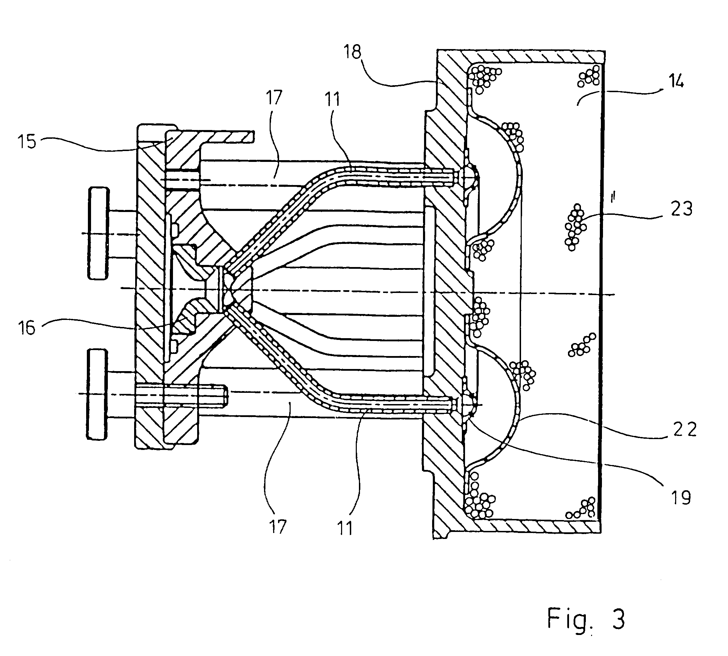

Wie insbesondere aus der Schnittdarstellung in Fig. 3 ersichtlich ist, ist das Gehäuse der Zersetzungskammer 12 zweiteilig aufgebaut, wobei die Trennung zwischen den beiden Reaktionsräumen 14 und 25 verläuft. Der in der Zeichnung in Fig. 3 linke Teil bildet zusammen mit dem Einspritzbereich eine gemeinsame Baugruppe, während der in der Zeichnung rechte Teil zusammen mit der Expansionsdüse 13 die zweite Baugruppe bildet. Beide Baugruppen können vor dem Zusammenfügen vollständig vormontiert werden, wobei die Reaktionsräume 14 und 25 auf einfache Weise jeweils von der Trennstelle her mit den zugehörigen Katalysatorbett befüllt werden können. Siebplatten 28 und 29 verhindern ein Herausfallen der Katalysatorkörner. Durch ähnliche Siebplatten 30 ist auch der zweite Reaktionsraum 25 gegenüber der Expansionsdüse 13 abgeschlossen.

Beim Beladen des ersten Reaktionsraumes 14 mit dem Katalysatorbett 23 sowie bei den sich anschließenden Abnahme- und Qualifikationsvibrationsprüfungen kann es aufgrund der mechanischen Reibung zwischen dem Aspiratorsieb 22 und den einzelnen Körnern des Katalysatorbettes 23 zu staubförmigem Abrieb, dem sogenannten Aspiratorstaub, kommen. Dabei ist nicht auszuschließen, daß dieser Staub über den Aspiratorring 19 und die Einspritzrohre 11 auch in das Einspritz- bzw. Steuerventil gelangt und hier möglicherweise eine Undichtigkeit des Ventilsitzes verursacht. Die Folge können Funktionsstörungen der gesamten Triebwerkseinheit sein.

Um dies zuversichtlich auszuschließen, ist, wie in Fig. 6 im Detail verdeutlich ist, jeweils im Mündungsbereich jedes der Einspritzrohre 11 in der Kopfplatte 18 ein Filtersieb 31 angeordnet, das das jeweilige Einspritzrohr 11 vom Aspiratorring 19 separiert. Dieses Filtersieb 31 hält den möglicherweise entstandenen Katalysatorabrieb vom Einspritzbereich fern.

Das durch die Filtersiebe 31, den Aspiratorring 19 sowie das Aspiratorsieb 22 austretende Hydrazin (N₂H₄) zerfällt beim Auftreffen auf das Katalysatorbett 23 unter Wärmeentwicklung in seine gasförmigen Komponenten, d.h. im wesentlichen in Stickstoff (N₂), Ammoniak (NH₃) und Wasserstoff (H₂). Die entstehenden Reaktionsgase gelangen zusammen mit noch unzersetztem Hydrazin in den zweiten Reaktionsraum 25, wo in dem zweiten Katalysatorbett 26 die vollständige Zersetzung erfolgt und von wo diese Gase unter hohem Druck über die Expansionsdüse 13 ins Freie strömen und so den gewünschten Schub erzeugen.

## Patentansprüche

1. Triebwerk auf der Basis der katalytischen und/oder chemischen Zersetzung eines flüssigen Energieträgers, insbesondere Hydrazin, bei dem der Energieträger über Einspritzrohre in eine mit Katalysatorbett gefüllte Zersetzungskammer (2) gefördert wird, wobei die Einspritzrohre (11) in einen zur Zersetzungskammer (2) hin abgedeckten, mit in die Zersetzungskammer (2) führenden Austrittsöffnungen versehenen Ringkanal (20) münden, dadurch gekennzeichnet, daß der Ringkanal (20) von einem im Querschnitt halbkreisförmig ausgebildeten Ring (19) gebildet wird, dessen gewölbte Außenfläche mit einer Vielzahl von Austrittsbohrungen (21) versehen ist.

2. Triebwerk nach Anspruch 1, dadurch gekennzeichnet, daß die Austrittsbohrungen (21) im Ring (19) auf wenigstens drei unterschiedlichen Kreisen angeordnet sind.

3. Triebwerk nach Anspruch 2, dadurch gekennzeichnet, daß auf unterschiedlichen Kreisen jeweils eine unterschiedliche Anzahl von Austrittsbohrungen angeordnet ist.

4. Triebwerk nach Anspruch 3, dadurch gekennzeichnet, daß die Anzahl der Austrittsbohrungen (21) vom innersten zum äußersten Kreis hin zunimmt.

5. Triebwerk nach einem der Ansprüche 1 bis 4, dadurch gekennzeichnet, daß der Ring (19) vom Katalysatorbett (23) durch wenigstens eine Lage eins Drahtgewebes (22) getrennt ist.

6. Triebwerk nach Anspruch 5, dadurch gekennzeichnet, daß das Drahtgewebe als ringförmiges Sieb (22) ausgebildet ist.

7. Triebwerk nach Anspruch 6, dadurch gekennzeichnet, daß das ringförmige Sieb (22) im Querschdnitt halbkreisförmig ausgebildet und die Auswölbung in Flußrichtung angeordnet ist.

8. Triebwerk nach einem der Ansprüche 1 bis 7, dadurch gekennzeichnet, daß zwischen dem Endbereich jedes Einspritzrohres (11) und dem Ring (19) ein Filtersieb (31) angeordnet ist.

9. Triebwerk nach Anspruch 8, dadurch gekennzeichnet, daß das Katalysatorbett aus wenigstens zwei unterschiedlich aufgebauten Lagen (23,26) besteht, die in Förderrichtung des Energieträgers nacheinander folgend angeordnet sind.

10. Triebwerk nach Anspruch 10, dadurch gekennzeichnet, daß wenigstens eine Lage (26) aus Trägerkörpern aus Aluminiumoxidkeramik (Al₂O₃) besteht, die mit einer Beschichtung versehen ist, die in jeweils etwa gleichen Anteilen die Elemente Iridium (Ir) und Ruthenium (Ru) enthält.

11. Triebwerk nach Anspruch 10, dadurch gekennzeichnet, daß der Anteil an Iridium und Ruthenium jeweils etwa 16 Gewichtsprozent beträgt.

12. Triebwerk nach Anspruch 10 oder 11, dadurch gekennzeichnet, daß eine weitere Lage (23) aus mit Iridium beschichteten Trägerkörpern aus Aluminiumoxidkeramik besteht.

13. Triebwerk nach einem der Ansprüche 10 bis 12, dadurch gekennzeichnet, daß die mit dem IridiumRuthenium-Gemisch beschichteten Trägerkörper die den Einspritzrohren (11) abgewandten Lage (26) des Katalysatorbettes bilden.

14. Triebwerk nach einem der Ansprüche 1 bis 13, dadurch gekennzeichnet, daß das Gehäuse der Zersetzungskammer (2,12) in axialer Richtung zweigeteilt aufgebaut ist.

15. Triebwerk nach Anspruch 14, dadurch gekennzeichnet, daß der dem Einspritzbereich benachbart angeordnete, die erste Lage (23) des Katalysatorbettes enthaltende Teilbereich der Zersetzungskammer (2,12) zusammen mit dem Einspritzbereich eine gemeinsame Baugruppe bildet.

16. Triebwerk nach Anspruch 15, dadurch gekennzeichnet, daß der die zweite Lage (26) des Katalysatorbettes enthaltende Teilbereich der Zersetzungskammer (2,12) zusammen mit der Expansionsdüse (3,13) eine zwei Baugruppe bildet.

## Claims

1. Propulsion unit based on the catalytic and/or chemical decomposition of a liquid energy source, in particular hydrazine, in which the energy source is delivered through injection pipes into a decomposition chamber (2) filled with catalyst bed, wherein the injection pipes (11) end in an annular channel (20), which is covered towards the decomposition chamber (2) and provided with outlet openings leading into the decomposition chamber (2), characterised in that the annular channel (20) is formed by a ring (19) which is constructed with a semicircular cross section and the arched outer surface of which is provided with a plurality of outlet holes (21).

2. Propulsion unit according to claim 1, characterised in that the outlet holes (21) in the ring (19) are disposed on at least three different circles.

3. Propulsion unit according to claim 2, characterised in that a different number of outlet holes are in each case disposed on different circles.

4. Propulsion unit according to claim 3, characterised in that the number of outlet holes (21) increases from the innermost to the outermost circle.

5. Propulsion unit according to one of claims 1 to 4, characterised in that the ring (19) is separated from the catalyst bed (23) by at least one layer of a wire cloth (22).

6. Propulsion unit according to claim 5, characterised in that the wire cloth is constructed as an annular screen (22).

7. Propulsion unit according to claim 6, characterised in that the annular screen (22) is constructed with a semicircular cross section and the outward arch is disposed in the flow direction.

8. Propulsion unit according to one of claims 1 to 7, characterised in that a filter screen (31) is disposed between the end region of each injection pipe (11) and the ring (19).

9. Propulsion unit according to claim 8, characterised in that the catalyst bed consists of at least two layers (23, 26) of different structures which are disposed one after the other in the direction of delivery of the energy source.

10. Propulsion unit according to claim 10, characterised in that at least one layer (26) consists of support bodies of aluminium oxide ceramic (Al₂O₃), which is provided with a coating comprising the elements iridium (Ir) and ruthenium (Ru) in approximately equal proportions.

11. Propulsion unit according to claim 10, characterised in that the proportion of iridium and ruthenium in each case constitutes approximately 16 weight percent.

12. Propulsion unit according to claim 10 or 11, characterised in that another layer (23) consists of support bodies of aluminium oxide ceramic which are coated with iridium.

13. Propulsion unit according to one of claims 10 to 12, characterised in that the support bodies coated with the iridium-ruthenium mixture form the layer (26) of the catalyst bed which is remote from the injection pipes (11).

14. Propulsion unit according to one of claims 1 to 13, characterised in that the housing of the decomposition chamber (2, 12) is divided into two parts in the axial direction.

15. Propulsion unit according to claim 14, characterised in that the sub-region of the decomposition chamber (2, 12) which is disposed adjacent to the injection region and comprises the first layer (23) of the catalyst bed forms together with the injection region a common sub-assembly.

16. Propulsion unit according to claim 15, characterised in that the sub-region of the decomposition chamber (2, 12) which comprises the second layer (26) of the catalyst bed forms together with the expansion nozzle (3, 13) a second sub-assembly.

## Revendications

1. Moteur à réaction fonctionnant selon le principe de la décomposition catalytique et/ou chimique d'une source liquide d'énergie, en particulier l'hydrazine, dans le cas duquel la source d'énergie est alimentée par des tuyaux d'injection dans une chambre de décomposition (2) contenant un lit de catalyseur, les tuyaux d'injection (11) débouchant dans un canal circulaire (20) recouvert en direction de la chambre de décomposition (2) et pourvu d'orifices de sortie menant à la chambre de décomposition (2), caractérisé en ce que le canal circulaire (20) est formé d'un anneau (19) de section transversale semi-circulaire dont la surface extérieure bombée est pourvue d'une multitude d'alésages de sortie (21).

2. Moteur à réaction suivant la revendication 1, caractérisé en ce que les alésages de sortie (21) sont disposés dans l'anneau (19) sur au moins trois cercles différents.

3. Moteur à réaction suivant la revendication 2, caractérisé en ce que sur chacun des cercles sont disposés respectivement des nombres différents d'alésages de sortie.

4. Moteur à réaction suivant la revendication 3, caractérisé en ce que le nombre d'alésages de sortie (21) va en augmentant du cercle le plus interne vers le cercle le plus externe.

5. Moteur à réaction suivant l'une quelconque des revendications 1 à 4, caractérisé en ce que l'anneau (19) est séparé du lit de catalyseur (23) par au moins une surface d'une toile métallique (22).

6. Moteur à réaction suivant la revendication 5, caractérisé en ce que la toile métallique est conçue comme un tamis circulaire (22).

7. Moteur à réaction suivant la revendication 6, caractérisé en ce que le tamis circulaire (22) présente une section transversale semi-circulaire et en ce que la courbure est orientée dans la direction d'écoulement.

8. Moteur à réaction suivant l'une quelconque des revendications 1 à 7, caractérisé en ce qu'un tamis filtrant (31) est agencé entre la zone d'extrémité de chaque tuyau d'injection (11) et l'anneau (19).

9. Moteur à réaction suivant la revendication 8, caractérisé en ce que le lit de catalyseur se compose d'au moins deux couches de composition différente (23, 26) disposées l'une à la suite de l'autre dans la direction d'alimentation de la source d'énergie.

10. Moteur à réaction suivant la revendication 10, caractérisé en ce qu'une couche (26) est faite de corps porteurs en céramique oxydée d'aluminium (Al₂O₃), pourvue d'un revêtement comprenant la même proportion d'iridium (Ir) et de ruthénium (Ru).

11. Moteur à réaction suivant la revendication 10, caractérisé en ce que la proportion d'iridium et de ruthénium atteint respectivement environ 16 pour-cents en poids.

12. Moteur à réaction suivant la revendication 10 ou 11, caractérisé en ce qu'une autre couche (23) est faite de corps porteurs en céramique oxydée d'aluminium recouverts d'iridium.

13. Moteur à réaction suivant l'une quelconque des revendications 10 à 12, caractérisé en ce que les corps porteurs recouverts d'un mélange d'iridium et de ruthéniun forment la couche (26) opposée aux tuyaux d'injection (11).

14. Moteur à réaction suivant l'une quelconque des revendications 1 à 13, caractérisé en ce que le corps de la chambre de décomposition (2, 12) est conçu en deux parties dans la direction axiale.

15. Moteur à réaction suivant la revendication 14, caractérisé en ce que la partie de la chambre de décomposition (2, 12) proche de la zone d'injection et contenant la première couche (23) du lit catalyseur forme un ensemble avec la zone d'injection.

16. Moteur à réaction suivant la revendication 15, caractérisé en ce que la partie de la chambre de décomposition (2, 12) contenant la deuxième couche (26) du lit de catalyseur forme un ensemble avec la tuyère convergente-divergente (3, 13).
